# NEUE EUROPÄISCHE PATENTSCHRIFT

(11) **EP 0 391 884 B2**
(45) Veröffentlichungstag und Bekanntmachung des Hinweises auf die Entscheidung über den Einspruch: **11.05.1994**
(45) Hinweis auf die Patenterteilung: 19.02.1992
(21) Anmeldenummer: 90890075.6
(22) Anmeldetag: 14.03.1990
(51) Int. Cl.: E06B 3/66

(54) **Vorrichtung zum Füllen der Randfuge von Isolierglasscheiben mit Versiegelungsmasse**
Method for filling the peripheral edge joints of double glazings with a sealant
Méthode de remplissage du joint périphérique d'un vitrage multiple par injection d'une matière d'étanchéité

(30) Priorität: 03.04.1989 AT 775/89
(43) Veröffentlichungstag der Anmeldung: 10.10.1990
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Otto

(56) Entgegenhaltungen:
- EP-A- 0 176 388
- DE-A- 2 834 902
- DE-A- 3 217 410
- DE-C- 2 816 437
- DE-U- 8 710 842
- GB-A- 2 016 960
- US-A- 4 714 425

## Beschreibung

Die Erfindung betrifft eine Vorrichtung mit den Merkmalen des einleitenden Teils des Anspruch 1.

Vorrichtungen zum automatischen Füllen von Randfugen von Isolierglasscheiben sind z.B. aus der DE-A-28 45 475, der DE-C-28 16 437, der DE-B-28 46 785, der DE-A-28 34 902 und der DD-A-158 766 bekannt. Die DE-C-28 16 437 zeigt eine Vorrichtung mit den Merkmalen des einleitenden Teils des unabhängigen Anspruches 1.

Mit solchen Vorrichtungen können jedoch lediglich Randfugen von Isolierglasscheiben mit geradlinigen Umrißformen gefüllt werden.

Aus der EP-A-252 066 ist es bekannt, eine Vorrichtung zum Füllen der Randfugen von Isolierglasscheiben auf Grund von gespeicherten Daten der Isolierglasscheiben zu steuern. Konkret geoffenbart ist in der EP-A-252 066 die Steuerung der Bewegungen der Fülldüse(n) und der Isolierglasscheibe, sowie der Menge an zugeführter Füllmasse durch am Isolierglas angebrachte Datenträger. Die Kapazität dieser Datenträger ist aber begrenzt, so daß sie nur eine beschränkte Zahl der an sich benötigten Daten enthalten können. Der Gedanke, die Geschwindigkeit, mit der Fülldüsen entlang der Randfuge von Isolierglasscheiben bewegt werden, zu ändern, ist in der EP-A-252 066 nicht geoffenbart.

Bei den bekannten Vorrichtungen der eingangs genannten Gattung ("Versiegelungsmaschinen") wird die Versiegelungsmasse durch frei hängende, an die Fülldüse angeschlossene Leitungen zugeführt. Da die Fülldüsen - insbesondere wenn nur eine Fülldüse vorgesehen ist, aus der die Versiegelungsmasse in die Randfuge eingespritzt wird - um eine zur Ebene der Isolierglasscheibe senkrechte Ebene verdreht werden müssen, ergeben sich wegen der Leitungen Probleme.

Durch offenkundige Vorbenutzung ist eine Vorrichtung der eingangs genannten Gattung bekannt geworden. Bei dieser bekannten Vorrichtung ist die Fülldüse an dem der zu versiegelnden Isolierglasscheibe zugekehrten Ende einer hohl ausgebildeten Düsenwelle starr montiert. Die Düsenwelle ist ihrerseits starr an einem Düsenkopf befestigt, der an Führungsstangen, die in einer um eine zur Isolierglasscheibe normale Achse in einem Schlitten drehbar gelagerten, hohlen Welle normal zur zu versiegelnden Isolierglasscheibe verschiebbar sind, befestigt ist. Bei der bekannten Vorrichtung ist die Leitung für Versiegelungsmasse durch die hohle Welle geführt und an den Düsenkopf angeschlossen und die Versiegelungsmasse strömt durch den Hohlraum der Düsenwelle zur Fülldüse. Bei der bekannten Vorrichtung ist die Düsenwelle gleichzeitig Träger für die Fülldüse und Leitung für die Versiegelungsmasse.

Der Erfindung liegt die Aufgabe zu Grunde, eine Vorrichtung der eingangs genannten Gattung anzugeben, bei der die Leitungen für die Versiegelungsmasse die Verdrehbarkeit der Fülldüse nicht behindern, so daß diese beispielsweise ohne weiteres um 360° oder mehr verdreht werden kann.

Gelöst wird diese Aufgabe durch die kennzeichnenden Merkmale des Anspruch 1.

Die Unteransprüche betreffen vorteilhafte Ausgestaltungen der erfindungsgemäßen Vorrichtung.

Bei den bekannten Versiegelungsvorrichtungen wird die Menge der zur Fülldüse geförderten Versiegelungsmasse an die jeweils benötigte Menge an Versiegelungsmasse durch Ventile und/oder durch Regelung der Fördermittel (Zahnradpumpen, Extruder, Förderzylinder, die mit Hydraulikmedium beaufschlagt werden) angepaßt. Dies ist wegen der Trägheit der Vorrichtungen schwierig, da Änderungen nicht in kurzer Zeit ausgeführt werden können. Hinzu kommt, daß wegen der Elastizität der Leitungen zwischen dem Fördermittel (Pumpe) und der Fülldüse Erhöhungen der Fördermenge nur verzögert wirksam werden und umgekehrt, bei einer Verringerung der Fördermenge noch einige Zeit lang zu viel Versiegelungsmasse aus der Fülldüse austritt. Auch lassen sich die geringen Änderungen mit Hilfe der üblicherweise verwendeten Proportionalventile nicht genau und rasch einstellen.

In der DE-OS 2 907 210 ist ein Versiegelungsverfahren beschrieben, bei dem die Drosselung der Zufuhr von Versiegelungsmasse stets gleichzeitig mit einer Verlangsamung der Bewegung der Isolierglasscheibe erfolgt Bei der DE-OS 2 907 210 sollen der Durchfluß der Versiegelungsmasse durch die Fülldüse und die Relativgeschwindigkeit zwischen der Fülldüse und der Isolierglasscheibe einander direkt proportional am Anfang der Bewegung kontinuierlich erhöht und am Ende der Bewegung kontinuierlich herabgesetzt werden. In der DE-OS 2 907 210 sind auch Probleme dieser Steuerung, nämlich das Erfordernis der "Verzögerten" Ansteuerung des Pumpenantriebes erwähnt.

Beim Betrieb von Vorrichtungen zum Füllen der Randfuge von Isolierglasscheiben wird gewöhnlich die durchschnittlich benötigte Menge an Versiegelungsmasse durch entsprechende Einstellung des Fördermittels (z.B. Zahnradpumpe, Zylinderpumpe) und der Ventile eingestellt und während des gesamten Versiegelungsvorganges im wesentlichen konstant gehalten.

Bei diesen Vorrichtungen soll aber die in die Randfuge eingebrachte Menge an Versiegelungsmasse genau und möglichst ohne zeitliche Verzögerungen auf die jeweils benötigte Menge eingestellt werden können.

Die Vorrichtung gemäß der Erfindung kann hiezu eine Steuerung mit einem den Querschnitt der Randfuge erfassenden Sensor aufweisen, mit welcher die Geschwindigkeit, mit der die Fülldüse durch Bewegen des Isolierglases und/oder der Düsenhalterung entlang der Abschnitte der Randfuge bewegt wird, entsprechend dem jeweils erfaßten Wert der Größe des Querschnittes der Randfuge geändert wird. Hiezu wird als typische Größe für den Querschnitt der Randfuge deren Breite und (mittlere) Tiefe herangezogen. Da sich die Breite der Randfuge nicht ändert, wird bevorzugt mit Hilfe eines mechanischen oder berührungslosen Sensors (Fühler) die Tiefe der Randfuge als Maß für deren Querschnitt und damit für die benötigte Menge an Versiegelungsmasse bestimmt. In einer Ausführungsform der Erfindung ist daher vorgesehen, daß ein neben der Fülldüse vorgesehener Tastfinger zum Erfassen der Tiefe der Randfuge an einem am der Isolierglasscheibe zugekehrten Ende der hohl ausgebildeten Welle um eine parallel zur Ebene der Isolierglasscheibe ausgerichteten Achse verschwenkbar gelagerten Arm angeordnet ist.

Wenn mit Hilfe der Tastvorrichtung eine Änderung der Tiefe der Randfuge festgestellt wird, wird die Relativgeschwindigkeit zwischen Fülldüse und Randfuge und damit die je Längeneinheit der Randfuge in diese eingebrachte Menge an Versiegelungsmasse entsprechend vergrößert bzw. verkleinert.

Diese Änderung der Relativgeschwindigkeit, d.h. die Geschwindigkeit, mit der sich die Fülldüse entlang der Randfuge bewegt, kann rasch und ohne Verzögerungen auch in größerem Ausmaß ausgeführt werden, wenn die Geschwindigkeit, mit der die Fülldüse und/oder die Geschwindigkeit, mit der die Isolierglasscheibe bewegt wird, geändert wird.

Die erfindungsgemäße Vorrichtung erlaubt eine problemlose Versiegelung auch im Eckbereich und die Versiegelung von nicht rechteckigen Isolierglasscheiben, so z.B. von Isolierglasscheiben mit runden Randabschnitten.

Änderungen der Tiefe der Randfuge (die Breite derselben ist konstant), die durch ungenau angesetzte Abstandhalterrahmen entstehen und die insbesondere auch im Eckbereich auftreten, lassen sich beim Versiegeln mit der erfindungsgemäßen Vorrichtung leicht beherrschen, insbesondere wenn für den Antrieb der Düsenhalterung und den Antrieb der Transportmittel für die Isolierglasscheiben sogenannte "Servomotoren" mit hoher Anlaufleistung verwendet werden.

Bei Benutzung der erfindungsgemäßen Vorrichtung kann bevorzugt so vorgegangen werden, daß die je Zeiteinheit zur Fülldüse geförderte Menge an Versiegelungsmasse erfaßt wird, und daß die Geschwindigkeit, mit der die Fülldüse entlang der Randfuge bewegt wird, bei verringerter Förderleistung verkleinert und bei erhöhter Förderleistung vergrößert wird. Dies macht es möglich, Änderungen der Förderleistung der Fördermittel für die Versiegelungsmasse, die beispielsweise durch eine Anderung der Temperatur der zur Fülldüse zu fördernden Versiegelungsmasse entstehen können, (wärmere Versiegelungsmasse läßt sich leichter fördern als kältere Versiegelungsmasse) auszugleichen. Auf diese Weise ist es nicht mehr notwendig, die Förderleistung an Versiegelungsmasse genau konstant zu halten. Es versteht sich, daß Änderungen der Relativgeschwindigkeit zwischen Fülldüse und Isolierglasscheibe auf Grund von Änderungen der Förderleistung Änderungen der Relativgeschwindigkeit wegen verschiedener Tiefen der Randfuge überlagert werden können. So kann beispielsweise der Fall eintreten, daß eine Verringerung der Relativgeschwindigkeit in einem Bereich, in dem die Randfuge tiefer ist, durch eine Erhöhung der Relativgeschwindigkeit, die vorgenommen wird, weil die Förderleistung an Versiegelungsmasse zunimmt, teilweise oder ganz aufgehoben wird. Die tatsächliche Änderung der Relativgeschwindigkeit zwischen Fülldüse und Randfuge entspricht dann der Summe beiden Änderungen der Relativgeschwindigkeit zwischen Fülldüse und Isolierglasscheibe.

Die Vorrichtung gemäß der Erfindung eignet sich wie erwähnt auch zum Füllen der Randfugen von Isolierglasscheiben mit beliebig ausgebildeter Umrißform mit Versiegelungsmasse. Dabei liegen die Geometriedaten der Umrißform oder von Teilen der Umrißform der Isolierglasscheiben mit Vorteil in gespeicherter Form vor, und die Bewegungen der Düse und/oder der Isolierglasscheiben werden auf Grund dieser Daten gesteuert.

Dabei wird mit Vorteil so vorgegangen, daß auf Grund von Geometriedaten über die Umrißform der Isolierglasscheiben die Steuerung der Bewegung der wenigstens einen Fülldüse und/oder der Isolierglasscheibe erfolgt und daß die Fülldüse um eine zur Isolierglasscheibe normale Drehachse derart verschwenkt wird, daß die Fülldüse stets der Umrißkante der Isolierglasscheibe zugekehrt ist.

Die Relativgeschwindigkeit zwischen der Fülldüse und der Isolierglasscheibe kann dem jeweiligen Teilstück der Umrißform angepaßt werden. Hiezu kann die Geschwindigkeit der Bewegung der Isolierglasscheibe in horizontaler Richtung geändert und/oder die Geschwindigkeit der Bewegung der Fülldüse normal zur Bewegungsrichtung der Isolierglasscheibe geändert werden.

Beim Betrieb der erfindungsgemäßen Vorrichtung wird dabei mit Vorteil so vorgegangen, daß die Geschwindigkeit, mit der die Fülldüse entlang der Randfuge der Isolierglasscheibe bewegt wird, im Bereich gerader und/oder wenig gekrümmter Randfugenabschnitte höher ist als im Bereich von Ecken und/oder stärkeren Krümmungen der Randfuge, wobei die Menge an je Zeiteinheit zur Fülldüse geförderter Versiegelungsmasse bei höherer Relativgeschwindigkeit zwischen der Fülldüse und der Isolierglasscheibe größer ist als bei kleinerer Relativgeschwindigkeit. Hierbei wird die Erkenntnis ausgenützt, daß gerade und nur wenig gekrümmte Abschnitte der Randfuge mit höherer Relativgeschwindigkeit zwischen Fülldüse und Isolierglasscheibe, also rascher versiegelt werden können, als Ecken oder Abschnitte der Randfuge mit kleinem Krümmungsradius. Die Änderungen der Relativgeschwindigkeit zwischen der Fülldüse und der Isolierglasscheibe auf Grund von Änderungen des Querschnittes der Randfuge und/oder der z.B. temperaturbedingten Änderungen der Förderleistung an Füllmasse gehen dann von höheren (gerade Abschnitte der Randfuge) bzw. kleineren (gekrümmte Abschnitte der Randfuge) absoluten Förderleistungen bzw. Relativgeschwindigkeiten aus.

Die Drehung der Fülldüse um die zur Isolierglasebene normale Drehachse erfolgt vorzugsweise durch einen Schrittmotor. Dadurch wird der gewünschte Anstellwinkel der Fülldüse gegenüber der Umrißkante bei der Bewegung des Versiegelungsorganes entlang der Randfuge immer beibehalten.

In der Praxis erfolgt die Steuerung der Bewegung der Fülldüse und/oder der Isolierglasscheibe von einem Prozeßrechner auf Grund gespeicherter Geometriedaten über die Umrißform der Isolierglasscheiben.

Von besonderem Vorteil ist es, wenn die Steuerung auf Grund der vom Prozeßrechner eines Glasschneidetisches verwendeten Geometriedaten erfolgt, da in diesem Fall bereits vorhandene Daten weiterverwendet werden können.

Zur Ermittlung der Geometriedaten über die Umrißform der Isolierglasscheiben ist es auch möglich, daß ein Meßkopf, beispielsweise ein Lichttastkopf, die Außenkontur der Isolierglasscheibe abfährt und die Meßdaten, bezogen auf ein Achsenkreuz, an einen Prozeßrechner weitergibt, wo sie gespeichert werden. So können auch Konturen, die mathematisch oder geometrisch nicht genau definiert sind, erfaßt und für die Steuerung herangezogen werden.

Für mathematisch und geometrisch definierte Umrißformen, die noch nicht gespeichert sind, bietet sich auch an, daß die Geometriedaten von Hand in den Prozeßrechner eingegeben werden.

Es ist auch möglich, daß den Geometriedaten über die Umrißform unregelmäßig geformter Isolierglasscheiben ein Code zugeordnet wird, unter dem die Daten abgespeichert und wieder abrufbar sind.

Die Erfindung wird nun anhand der Zeichnungen näher erläutert. Es zeigt
Fig. 1 schematisch eine Schrägansicht einer Vorrichtung zum Füllen der Randfuge einer Isolierglasscheibe,
Fig. 2 eine vergrößerte Darstellung eines Details der Vorrichtung,
Fig. 3 bis 5 schematisch den Datenfluß der Geometriedaten der Umrißform einer Isolierglasscheibe,
Fig. 6 ein Schaubild der Steuerung einer Versiegelungsanlage,
Fig. 7 die Halterung der Fülldüse und des Tastfingers am Schlitten und
Fig. 8 die Halterung von unten der Fig. 7 aus gesehen.

Eine Isolierglasscheibe 1 mit einer in einem Abschnitt ihres Umfanges bogenförmig ausgebildeten Umrißkontur 2, wird in Richtung des Doppelpfeiles 3 auf einem Horizontalförderer 21 , der wie in der DE-OS 30 38 425 beschrieben konstruiert sein kann, mit einstellbarer Geschwindigkeit bewegt. Dabei ist die Geschwindigkeit der Isolierglasscheibe 1 kleiner, wenn sich die Fülldüse 4 an der Stelle 5 (gekrümmte Randfuge) der Umrißkontur 2 der Isolierglasscheibe 1 befindet, als wenn sich die Fülldüse 4 an der Stelle 6 (gerade Randfuge) der Umrißkontur 2 befindet.

Ebenso ändert sich die Geschwindigkeit der Fülldüse 4 in Richtung des Doppelpfeils 7, d.h. normal zur Bewegungsrichtung der Isolierglasscheibe 1, wobei hier die Geschwindigkeit der Fülldüse 4 bei Bewegung von der Stelle 5 zur Stelle 6 der Umrißkontur 2 abnimmt.

Während dieser Bewegung erfolgt eine Drehung der Fülldüse 4 um eine normal zur Ebene der Isolierglas scheibe 1 stehende Achse 8 in Richtung des Doppelpfeiles 9. Durch diese Drehbewegung der Fülldüse 4, die von einem Motor 11, vorzugsweise einem Schrittmotor oder einem Hydraulikmotor bewerkstelligt wird, wird die richtige Ausrichtung der Düsenöffnung 10 der Fülldüse 4 gegenüber der Umrißkontur 2 der Isolierglasscheibe 1 immer beibehalten.

Es ist aber ebenso möglich, während der Bewegung der Fülldüse 4 die Ausrichtung ihrer Düsenöffnung 10 zur Isolierglasscheibe 1 in Abhängigkeit von der Geometrie der Umrißform und der Relativgeschwindigkeit zu ändern, wenn dies in besonderen Fällen erforderlich ist.

Die Steuerung der Bewegungen der Isolierglasscheibe 1 und der Fülldüse 4 sowie der in der Zeiteinheit von der Fülldüse 4 in die Randfuge eingebrachten Menge an Versiegelungsmasse 12 erfolgt auf Grund der im Prozeßrechner 13 gespeicherten Geometriedaten über die Umrißform der Isolierglasscheibe 1.

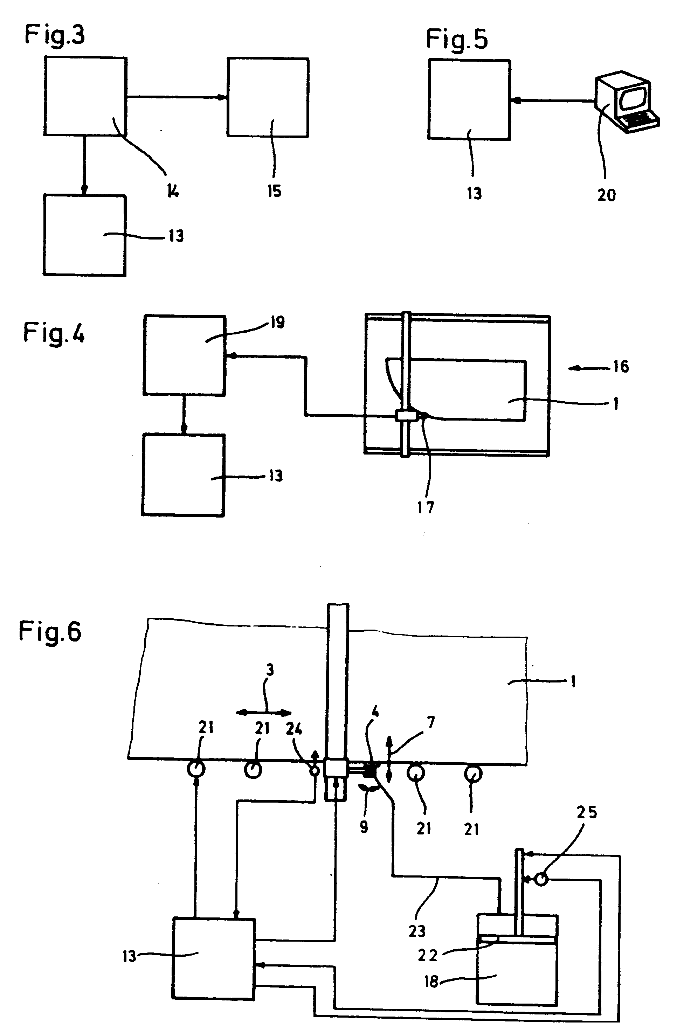

In Fig. 3 ist schematisch der Datenfluß der Geometriedaten der Isolierglasscheibe 1 vom Prozeßrechner 14, der einen Glasschneidetisch 15 steuert, zum Prozeßrechner 13 der Versiegelungsanlage dargestellt.

Fig. 4 zeigt schematisch einen Meßtisch 16 mit einer Isolierglasscheibe 1, deren Außenkontur von einem Lichttastkopf 17 abgefahren wird, wobei die erhaltenen Meßdaten an einen Prozeßrechner 19 und von diesem an den Prozeßrechner 13 der Versiegelungsanlage weitergegeben werden.

Fig. 5 schließlich zeigt eine Ausführungsvariante, bei der die Geometriedaten der Umrißform einer Isolierglasscheibe händisch in einen Rechner 20 eingegeben und von dort zum Prozeßrechner 13 der Versiegelungsanlage übertragen werden.

Die Ausführung der Vorrichtung zum Füllen der Randfuge von Isolierglasscheiben beschränkt sich nicht auf eine einzige Fülldüse 4, sondern es können gleichzeitig zwei oder mehrere Fülldüsen 4 an verschiedenen Stellen der Randfuge der Isolierglasscheibe 1 tätig sein bzw. ist auch ein gleichzeitiges Füllen der Randfugen von Mehrscheibenisolierglas mit nebeneinander angeordneten Fülldüsen möglich, wenn nicht Mehrfachdüsen verwendet werden. Eine mögliche Form von Fülldüsen bzw. von Mehrfachdüsen ist in der DE-OS 32 17 410 beschrieben.

Mit der erfindungsgemäßen Vorrichtung können bei Verwendung eines Horizontalförderers, z.B. der aus der DE-PS 30 38 425 bekannten Fördervorrichtung, Isolierglasscheiben 1 versiegelt werden, die wenigstens eine gerade Kante besitzen. Die seitliche Abstützung der Isolierglasscheiben 1 erfolgt durch eine Stützwand, die z.B. als Luftkissenwand oder als Rollenfeld ausgebildet ist oder durch Rollen, die an einem höhenverstellbaren Balken vorgesehen sind, und die nur am oberen Rand der Isolierglasscheiben 1 angreifen, wie dies aus der DE-PS 30 38 425 bekannt ist.

Sollen Isolierglasscheiben ohne gerade Kanten versiegelt werden, dann kann die Bewegung der Isolierglasscheiben durch an diese seitlich angreifende, z.B. mit Saugköpfen ausgestattete, Fördereinrichtungen bewirkt werden.

Wenngleich in der erfindungsgemäßen Versiegelungsvorrichtung mehrere Fülldüsen verwendet werden können, wird in der Regel Vorrichtungen mit einer Fülldüse oder einer Mehrfachdüse der Vorzug gegeben. Grund hiefür ist es, daß sich die Relativgeschwindigkeit zwischen dem unteren, horizontalen (geraden) Rand der Isolierglasscheibe und der Fülldüse ändert, wenn die zweite Fülldüse den vom Horizontalförderer nach oben ragenden Abschnitt der Randfuge entlang bewegt wird. Weiters können Umrißformen auftreten, bei welchen die Bewegungsrichtung der Bewegung der Isolierglasscheibe umgekehrt werden muß, was einen erheblichen Steuerungsaufwand für die Regelung der Menge der aus der Fülldüse, die dem unteren Rand der Isolierglasscheibe zugeordnet ist, auszubringenden Versiegelungsmasse bedeuten würde.

Anhand von Fig. 6 wird nun die Steuerung einer nur durch einen aus Förderrollen 21 gebildeten Horizontalförderer, eine Fülldüse 4 und einem Vorratsbehälter 18 für Versiegelungsmasse veranschaulichten Vorrichtung zum Füllen der Randfuge einer Isolierglasscheibe 1 erläutert. In dieser Vorrichtung wird die Versiegelungsmasse, die im Vorratsbehälter 18 enthalten ist und von einem Kolben 22 belastet wird, durch nicht gezeigte Pumpen über eine flexible Leitung 23 zur Fülldüse 4 gefördert.

Ein Sensor 24 erfaßt die Tiefe der zu füllenden Randfuge 26 der Isolierglasscheibe 1. Dies genügt, da in der überwiegenden Zahl der Fälle die Größe des Querschnittes der Randfuge 26 eine Funktion des Luftzwischenraumes der Isolierglasscheibe 1 und der Tiefe der Randfuge 26 ist und sich der Luftzwischenraum bei einer Isolierglasscheibe 1 über die Länge der Randfuge 26 nicht ändert. Ein weiterer Sensor 25 erfaßt die Bewegungen des Kolbens 22 und damit die jeweilige Förderleistung an Versiegelungsmasse zur Fülldüse 4. Die von den Sensoren 24 und 25 erfaßten Daten werden dem Prozeßrechner 13 der Versiegelungsanlage zugeführt.

Der Prozeßrechner 13 gibt Steuerbefehle an den Horizontalförderer 21 für die Bewegungen der Isolierglasscheibe 1 in Richtung des Doppelpfeiles 3 und an den Antrieb für das Bewegen der Fülldüse 4 in Richtung des Doppelpfeiles 7 ab. Weiters steuert der Prozeßrechner 13 die Förderleistung an Versiegelungsmasse zur Fülldüse 4 durch die Leitung 23.

Durch Ändern der Relativgeschwindigkeit zwischen Fülldüse 4 und Isolierglasscheibe 1 in Abhängigkeit von der vom Sensor 24 erfaßten Tiefe der Randfuge 26 und der vom Sensor 25 ermittelten Förderleistung wird die in die Randfuge je Längeneinheit derselben eingebrachte Menge an Versiegelungsmasse so geregelt, daß die Randfuge mit Versiegelungsmasse stets bis zum gewünschten Maß - in der Regel randvoll (vgl. Fig. 4 der DE-OS 28 34 902) - gefüllt wird.

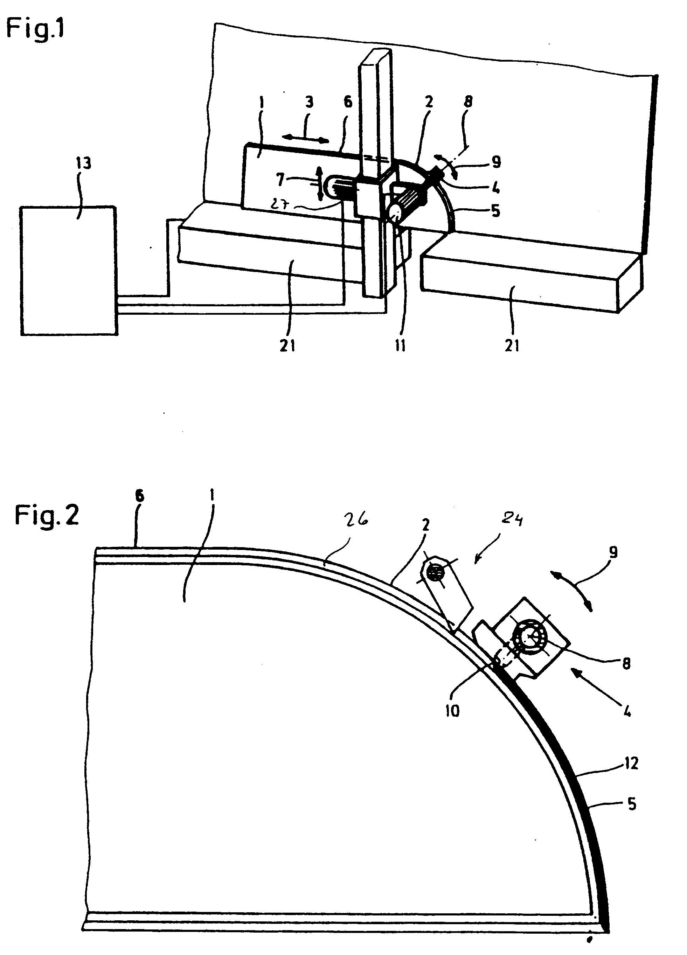

Die Förderleistung an Versiegelungsmasse aus dem Vorratsbehälter 18 zur Fülldüse 4 kann in geraden Bereichen der Randfuge (z.B. Abschnitt 6 in Fig. 1) erhöht und in gekrümmten Bereichen der Rangfugen (z.B.Abschnitt 5 in Fig. 1) verkleinert werden. Auch bei absichtlich geänderter Förderleistung gewährleistet das erfindungsgemäße oben erläuterte Verfahren eine stets richtige Füllung der Randfuge von Isolierglasscheiben, auch wenn sich die Tiefe der Randfuge ändert.

Mit der erfindungsgemäßen Vorrichtung kann die Versiegelung sowohl bei horizontal liegend als auch bei im wesentlichen lotrecht stehend bewegten Isolierglasscheiben ausgeführt werden, wobei letztere Variante bevorzugt ist

Der Sensor 25 der in Fig. 6 gezeigten Anordnung, der die Förderleistung an Versiegelungsmasse erfaßt, kann auch dem der Fülldüse 4 üblicherweise zugeordneten, in Fig. 6 nicht dargestellten Dosierzylinder zugeordnet sein. Bei dieser Ausführungsvariante wird die Förderleistung an Versiegelungsmasse zur Fülldüse 4 vom Sensor 25 durch Erfassen der Bewegungen des Dosierkolbens im Dosierzylinder in unmittelbarer Nähe der Fülldüse 4 erfaßt. So wird eine weitere Steigerung der Genauigkeit der Steuerung erzielt, da Verluste an Versiegelungsmasse, die beispielsweise während der Förderung derselben vom Vorratsbehälter bis zum Dosierzylinder auftreten können, ohne Einfluß bleiben. Schließlich ist es noch möglich, unmittelbar an der Fülldüse 4 einen die Förderleistung an Versiegelungsmasse erfassenden Sensor anzuordnen.

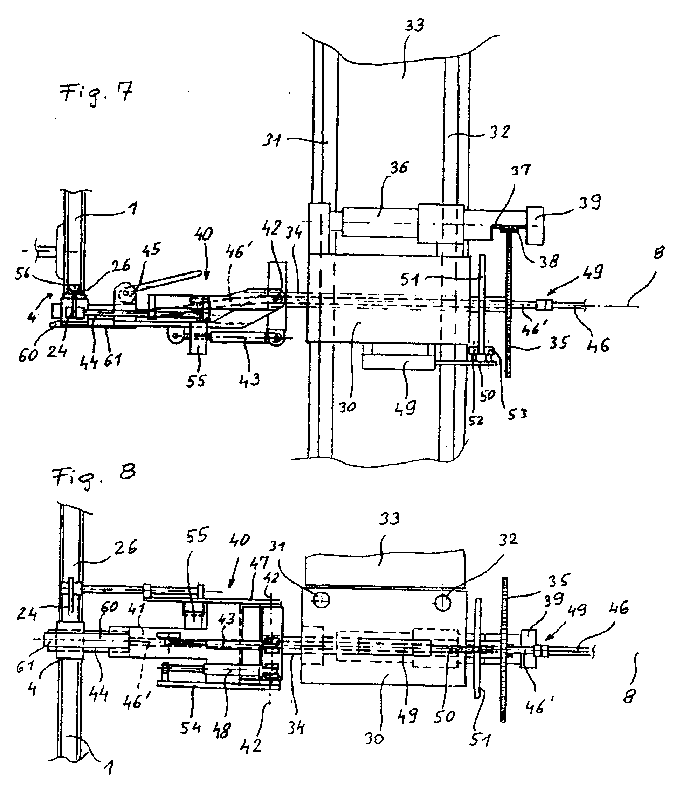

Bei der in den Fig. 7 und 8 gezeigten bevorzugten Ausführungsform der Fülldüse 4 wird diese von einem Schlitten 30 getragen, der an Führungsschienen 31 und 32, die an einem maschinengestellfesten oder in Richtung der Bewegungen der Isolierglasscheiben 1 (Pfeil 3 in Fig.1) verschiebbaren, im wesentlichen lotrecht aus gerichteten Balken 33 montiert sind, auf- und abverschiebbar geführt ist. Um den Schlitten 30 entlang der Führungsschiene 31 und 32 zu verschieben, sind vorzugsweise nicht gezeigte Kettenzüge und ein diese antreibender Motor 27 vorgesehen.

Im Schlitten 30 ist eine hohl ausgebildete Welle 34 verdrehbar und in Richtung ihrer Achse 8 verschiebbar gelagert. Zum Verschieben der Welle 34 ist ein Druckmittelmotor 49 vorgesehen, an dessen Kolbenstange 50 zwei an einer mit der Welle 34 starr verbundenen Scheibe 51 von beiden Seiten her angreifende Rollen 52, 53 vorgesehen sind.

Zum Verdrehen der hohl ausgebildeten Welle 34 um die Achse 8, die senkrecht zur Ebene der Isolierglasscheibe 1, deren Randfuge 26 mit Versiegelungsmasse zu füllen ist, ausgerichtet ist, ist die hohl ausgebildete Welle 34 mit einem Zahnrad 35 verbunden. Am Schlitten 30 ist weiters ein Antriebsmotor 36 befestigt, mit dessen Welle 37 ein Ritzel 38 verbunden ist, welches das Zahnrad 35 kämmt. Mit der Welle 37 des Motors 36 ist weiters ein Sensor 39 verbunden, der die vom Motor 36 ausgeführten Drehbewegungen und damit die Drehbewegungen der Welle 34 erfaßt.

Am der Isolierglasscheibe 1, deren Randfuge 26 durch aus der Fülldüse 4 austretende Versiegelungsmasse zu füllen ist, zugekehrten Ende der Welle 34 ist eine Halterung 40 vorgesehen, an welcher die Fülldüse 4 und ein als Tastfinger 24 ausgebildeter Sensor zum Erfassen der Tiefe der Randfuge 26 angeordnet sind.

Diese Halterung 40 weist einen Arm 41 auf, der unter der Wirkung eines Druckmittelzylinders 43 um eine zur Ebene der Isolierglasscheibe 1 parallele Achse 42 verschwenkbar ist, so daß die Fülldüse 4 gegen die Ränder der beiden Glastafeln der Isolierglasscheibe 1 angedrückt werden kann. Die Fülldüse 4 ist über ihren Düsenkörper 44 am Arm 41 mit Hilfe eines Exzenters 45 festgeklemmt.

Die Leitung 46, durch welche die Versiegelungsmasse zur Fülldüse 4 gefördert wird, ist durch die hohl ausgebildete Welle 34 geführt und an den Düsenkörper 44 angeschlossen.

Der Tastfinger 24, der wie aus Fig. 2 und 7 ersichtlich, bei Betrieb der Vorrichtung am Abstandhalter 56 der Isolierglasscheibe 1 aufliegt und an diesem entlanggleitet, ist an einem weiteren um die Achse 42 verschwenkbar gelagerten Arm 47 befestigt. Um den Tastfinger 24 an den Abstandhalter 56 anzulegen, ist einem mit dem Arm 47 verbundenen Hebel 54 ein weiterer Druckmittelmotor 48 zugeordnet.

An der Halterung 40 ist zwischen dem die Fülldüse 4 tragenden Arm 41 und dem Arm 47, welcher den Tastfinger 24 trägt, ein Sensor 55 vorgesehen, der den Relativbewegungen zwischen den Armen 41 und 47 und damit den Relativbewegungen zwischen der Fülldüse 4 und dem Tastfinger 24, also der Tiefe der Randfuge 26, entsprechende Signale an die Steuerung der Vorrichtung abgibt.

Bei Benützung der erfindungsgemäßen Vorrichtung wird die Fülldüse 4 durch Bewegen des Schlittens 30 aus einer Bereitschaftsstellung an den Rand der Isolierglasscheibe 1 angelegt und durch Beaufschlagen des Druckmittelzylinders 43 gegen diesen gedrückt. Ebenso wird der Tastfinger 24 durch Beaufschlagen des Druckmittelzylinders 48 gegen den Abstandhalterrahmen 56 angelegt.

Es ist erkennbar, daß durch die Aufnahme der Leitung 46 im Inneren der hohl ausgebildeten Welle 34 die Leitungen die Drehbewegungen der Fülldüse 4 anders als bei den bekannten Ausführungsformen, bei welchen die Leitungen frei hängend zur Fülldüse geführt sind, nicht behindem. Um die Verdrehbarkeit des in der Hohlwelle 34 aufgenommenen und zur Fülldüse 4 geführten Abschnittes 46' der Leitung 46 gegenüber dem übrigen Abschnitt der Leitung 46 zu gewährleisten, ist in der Leitung 46 eine Drehkupplung 57 vorgesehen.

Aus Fig. 7 ist noch erkennbar, daß die der Randfuge 26 der Isolierglasscheibe 1 zugekehrte Fläche der Fülldüse 4 konvex (teilzylindrisch) ausgebildet ist und daß die Fülldüse 4 auf den Rändern der Glasscheiben der Isolierglasscheibe 1 aufliegt. Dadurch kann ein und dieselbe Fülldüse für Isolierglasscheiben mit unterschiedlich breitem Luftzwischenraum verwendet werden und es wird weiters eine vorteilhafte hohlkehlenartige Außenfläche der in die Randfuge 26 eingebrachten Versiegelungsmasse erzielt.

## Patentansprüche

1. Vorrichtung zum Füllen der Randfuge (26) einer Isolierglasscheibe (1) mit Versiegelungsmasse mit wenigstens einer entlang der Randfuge (26) bewegten Fülldüse (4), mit einer hohl ausgebildeten Welle (34), die um eine zur Isolierglasscheibe (1) normale Drehachse (8) drehbar an einem Schlitten (30) gelagert ist, welcher Schlitten (30) an einer parallel zur Ebene der Isolierglasscheibe (1) und in einer lotrechten Ebene ausgerichteten Führung (31, 32, 33) parallel zur Ebene der Isolierglasscheibe (1) verfahrbar ist, und mit einer im Inneren der hohl ausgebildeten Welle (34) aufgenommenen und durch die hohl ausgebildete Welle (34) geführten Leitung (46) zum Zuführen der Versiegelungmasse zur Fülldüse (4) wobei in der Leitung (46) zum Zuführen von Versiegelungsmasse zur Fülldüse (4) wenigstens eine verdrehbare Kupplung (49) vorgesehen ist, dadurch gekennzeichnet, daß die Fülldüse (4) an der hohl ausgebildeten Welle (34) befestigt ist und, von einem an sich bekannten Arm (41) getragen ist, welcher Arm (41) an dem der Isolierglasscheibe (1) zugekehrten Ende der hohl ausgebildeten Welle (34) um eine parallel zur Ebene der Isolierglasscheibe (1) ausgerichtete Achse (42) verschwenkbar gelagert ist, und daß die hohl ausgebildete Welle (34) im Schlitten (30) in Richtung ihrer Drehachse (8) verschiebbar gelagert ist.

2. Vorrichtung nach Anspruch 1, dadurch gekennzeichnet, daß ein neben der Fülldüse (4) vorgesehener Tastfinger (24) zum Erfassen der Tiefe der Randfuge (26) an einem am der Isolierglasscheibe (1) zugekehrten Ende der hohl ausgebildeten Welle (34) um eine parallel zur Ebene der Isolierglasscheibe (1) ausgerichtete Achse (42) verschwenkbar gelagerten Arm (47) angeordnet ist.

3. Vorrichtung nach Anspruch 1 oder 2, dadurch gekennzeichnet, daß der Düsenkörper (44) an dem ihn haltenden Arm (41) durch eine Klemmvorrichtung (45) festgelegt ist.

4. Vorrichtung nach Anspruch 3, dadurch gekennzeichnet, daß das vordere Ende des Düsenkörpers (44) an einem mit dem Arm (41) verbundenen Anschlag (60) anliegt.

5. Vorrichtung nach Anspruch 4, dadurch gekennzeichnet, daß der Anschlag (60) am Arm (41) über eine Blattfeder (61) befstigt ist.

6. Vorrichtung nach einem der Ansprüche 1 bis 5, dadurch gekennzeichnet, daß der die Fülldüse tragende Arm (41) und der den Tastfinger (24) tragende Arm (47) um dieselbe Achse (42) verschwenkbar gelagert sind.

7. Vorrichtung nach einem der Ansprüche 2 bis 6, dadurch gekennzeichnet, daß zwischen dem die Fülldüse (4) tragenden Arm (41) und dem Arm (47), welcher den Tastfinger (24) trägt, ein die Relativbewegungen zwischen dem Arm (41) und dem Arm (47) messender Sensor (55) vorgesehen ist.

## Claims

1. Device for filling the peripheral edge joint (26) of an insulated glass panel (1) with sealant, having at least one filler nozzle (4) moved along the peripheral edge joint (26), with a hollow shaft (34), mounted on a carriage (30) so as to rotate about an axis of rotation (8) normal to the insulated glass panel (1), said carriage (30) being displaceable on a guide means (31, 32, 33) aligned parallel to the plane of the insulated glass panel (1) and in a vertical plane, and with a pipe (46) accommodated in the interior of the hollow shaft (34) and guided by the hollow shaft (34), for supplying the sealant to the filler nozzle (4), at least one rotatable coupling (49) being provided in the pipe (46) in order to supply sealant to the filler nozzle (4) , characterised in that the filler nozzle (4) is attached on the hollow shaft (34) and is supported by an arm (41) which is known per se, said arm (41) being mounted, at the end of the hollow shaft (34) facing the insulated glass panel (1), so as to pivot about an axis (42) aligned parallel to the plane of the insulated glass panel (1), and in that the hollow shaft (34) is mounted so as to be displaceable in the carriage (30) in the direction of the former's axis of rotation (8).

2. Device according to claim 1, characterised in that a feeler finger (24) provided in the vicinity of the filler nozzle (4) for detecting the depth of the peripheral edge joint (26) is disposed, at the end of the hollow shaft (34) facing the insulated glass panel (1), on an arm (47) mounted so as to pivot about an axis (42) aligned parallel to the plane of the insulated glass panel (1).

3. Device according to claim 1 or 2, characterised in that the nozzle member (44) is secured on the arm (41) holding it by a clamp device (45).

4. Device according to claim 3, characterised in that the forward end of the nozzle member (44) abuts against a stop means (60) connected to the arm (41).

5. Device according to claim 4, characterised in that the stop means (60) on the arm (41) is secured via a leaf spring (61).

6. Device according to one of claims 1 to 5, characterised in that the arm (41) carrying the filler nozzle, and the arm (47) carrying the feeler finger (24), are mounted so as to pivot about the same axis (42).

7. Device according to one of claims 2 to 6, characterised in that there is provided, between the arm (41) carrying the filler nozzle (4) and the arm (47) carrying the feeler finger (24), a sensor (55) measuring the relative movements between the arm (41) and the arm (47).

## Revendications

1. Dispositif pour le remplissage du joint périphérique (26) d'un vitrage isolant (1) à l'aide d'une masse de scellement comportant au moins une buse de remplissage (4) qui se déplace le long du joint périphérique (26) et avec un arbre creux (34) qui est monté sur un chariot (30) avec possibilité de rotation autour d'un axe (8) normal au vitrage isolant (1), lequel chariot (30) peut se déplacer parallèlement au plan du vitrage isolant (1) sur une glissière (31, 32, 33) parallèle au plan dudit vitrage isolant et située dans un plan vertical, et comportant une conduite (46) pour l'amenée de la masse de scellement à la buse de remplissage (4), qui est logée à l'intérieur de l'arbre creux (34) et passe à l'intérieur de celui-ci (34), au moins un raccord tournant (49) étant prévu dans la conduite (46) pour l'amenée à la buse de remplissage (4) de la masse de scellement, caractérisé en ce que la buse de remplissage (4) est fixée sur l'arbre creux (34) et est portée par un bras (41), connu en soi, lequel bras (41) est monté avec possibilité de pivotement autour d'un axe (42) parallèle au plan du vitrage isolant sur l'extrémité de l'arbre creux (34) tournée vers le vitrage isolant (1) et par le fait que l'arbre creux (34) est monté dans le chariot (30) avec possibilité de déplacement en translation dans la direction de son axe de rotation (8).

2. Dispositif selon la revendication 1, caracterisé en ce qu'un doigt de palpage (24) prévu à proximité de la buse de remplissage (4) pour la détermination de la profondeur du joint périphérique (26) est disposé sur un bras (47) qui est monté sur l'extrémité de l'arbre creux (34) tournée vers le vitrage isolant (1) avec possibilité de rotation autour d'un axe (42) parallèle au plan du vitrage isolant (1).

3. Dispositif selon la revendications 1 ou 2, caractérisé en ce que le corps de la buse (44) est fixé par un dispositif de serrage (45) sur le bras (41) qui le supporte.

4. Dispositif selon la revendication 3, caractérisé en ce que l'extrémité avant du corps de la buse (44) vient en appui sur une butée (60) reliée au bras (41).

5. Dispositif selon la revendication 4, caractérisé en ce que la butée (60) est fixée sur le bras (41) par l'intermédiaire d'un ressort à lame (61).

6. Dispositif selon l'une des revendications 1 à 5, caractérisé en ce que le bras (41) qui porte la buse de remplissage (4) et le bras (47) qui porte le doigt de palpage (24) sont montés pivotants autour du même axe (42).

7. Dispositif selon l'une des revendications 2 à 6, caractérisé en ce qu'il est prévu, entre le bras (41) qui porte la buse de remplissage (4) et le bras (47) qui porte le doigt de palpage (24), un capteur (55) qui mesure les déplacement relatifs entre le bras (41) et le bras (47).
